# EUROPEAN PATENT SPECIFICATION

(11) **EP 1 827 086 B1**
(45) Date of publication and mention of the grant of the patent: **20.08.2008**
(21) Application number: 05820656.6
(22) Date of filing: 14.12.2005
(51) Int. Cl.: A01K 23/00

(54) **PORTABLE FAECES CONTAINER**
TRAGBARER FÄKALIENBEHÄLTER
CONTENANT A EXCREMENTS PORTATIF

(30) Priority: 15.12.2004 GB 0427527; 08.03.2005 US 75366
(43) Date of publication of application: 05.09.2007
(73) Proprietor: Bell, Neil, Darlington, Durham DL3 8EP (GB)
(72) Inventor: Bell, Neil, Darlington, Durham DL3 8EP (GB)
(74) Representative: Pawlyn, Anthony Neil
(86) International application number: PCT/GB2005/004813
(87) International publication number: WO 2006/064219

(56) References cited:
- WO-A-02/071838
- CH-A5- 684 045
- US-A- 4 003 595
- US-A- 4 193 623
- US-A1- 2004 119 304

## Description

The present invention relates to a portable container for storing faeces, particularly pet or animal faeces.

It is known for pet owners to collect their pet's faeces in disposable bags and to dispose of the bags at an appropriate location. This is normally done as soon as possible for hygiene and comfort reasons. Some public places are provided with waste bins specifically designated for pet or animal faeces. However, many public places do not have designated waste bins or even any form of waste bin. Owners who collect the faeces in a disposable bag have to carry the disposable bag about their person until they find a waste bin. This is inconvenient, unappealing and unhygienic, particularly given the risk of leakage from the flimsy bags employed. Frequently, owners do not collect the faeces as a result. This is unhygienic, unsightly and is illegal in respect of some public places.

The present invention aims to provide a portable container for storing faeces after their collection which is convenient to use and/or more hygienic to use.

According to a first aspect of the present invention, there is provided a portable container for faeces, the container comprising:
a body, the body being provided with a first chamber and a second chamber, the first chamber being provided with a first closure which in a first position allows access to the first chamber and in a second position seals the first chamber, the second chamber being provided with an opening which allows access to the second chamber.

According to a second aspect of the present invention, there is provided a method of collecting faeces, the method comprising:
providing a container, the container comprising a body, the body being provided with a first chamber and a second chamber, the first chamber being provided with a first closure;
removing a bag from the second chamber;
collecting faeces in the bag;
opening the first closure for the first chamber; and
placing the bag in the first chamber.

The first and/or second aspects of the present invention may include one or more of the possibilities, features and options set out elsewhere in this document, including from amongst the following.

The container is preferably resilient. The container may be moulded or cast. The container may be formed from metal and/or plastics. It is preferred that the container be formed from polyethylene or polypropylene.

The container may include a handle, preferably provided on the top of the container.

The container is preferably provided with one or more attachment locations, for instance in the form of an aperture. The aperture may cooperate with a clip. An attachment location may be used to connect the container to the user and/or the animal and/or a lead or other component connected to the animal. An attachment location may be provided on a projection connected to the container or body. Preferably the body is provided with a handle. The container may be incorporated into the lead for an animal, for instance by the user holding the handle, with the container connected to the lead and with the lead connected to the animal.

The container may include a lead for an animal. The lead may have a first extended state, preferably in which the lead is attached to the animal. The lead may have a second retracted state. Preferably in the second retracted state over 90% of the length of the lead is accommodated within the container. The lead may enter and/or leave the container through an aperture in the bottom of the container. The lead may be retractable. The lead is preferably stored in a chamber which s separate from the first and/or second chamber. The lead may be stored in a chamber between the first and second chambers. The lead may be stored in a chamber provided alongside the second chamber. The transition of the lead from the first extended state to the second extended state and/or vice versa may be controlled by a user operated control. The user operated control may be provided on a handle provided on the container. The lead may be detachable from the container, for instance to allow washing of the container.

The first chamber and the second chamber may be separate parts, potentially connected together to form the container. Preferably the first chamber and second chamber are integrally provided.

Preferably the first chamber is separated from the second chamber by a partition. The partition may be a planar wall. The partition may be an integral part of the body. Preferably the partition is provided closer to the opening for the second chamber than to the opening for the first chamber. The partition may be provide between 20% and 40% of the way along the length of the container, measured from the opening to the second chamber.

The first chamber preferably receives one or more bags containing faeces. The first chamber may be circular in cross-section. The first chamber may be 10% or more larger than the second chamber, preferably 20% or more larger, in terms of its diameter and/or maximum width. The first chamber may be between two and five times the length of the second chamber. The first chamber may have at least twice, preferably at least three times, ideally at least four times, the volume of the second chamber.

The second chamber preferably receives one or more unused bags.

The bags may be disposable. The bags made be flexible. The bags may be formed of plastics, for instance polyethylene. Preferably, the unused bags are in the form of a roll.
Perforations or weakened points may be provided between individual unused bags. An unused bag may be removed from the second chamber by pulling the bag through the opening. An unused bag may be removed from the second chamber by opening a second closure, for instance by moving the second closure from a second position to a first position.

Preferably the faeces are collected in the bag with the bag detached from the container.

The first closure is preferably a lid. The first closure is preferably pivotally mounted on the body. Preferably the first closure is mounted by a hinge. The mounting for the hinge may be provided on one or more projections from the body and/or first closure. The first closure and the body may be connected by a pin. The first closure may be mounted on the body by a screw fit engagement.

Preferably a resilient component encourages the first closure to the second position. The first closure may be urged to the second position by a spring. The first closure may be moved from the second position to the first position by the application of force to a part of the first closure by the user. The force may be applied to an element extending from the first closure, preferably extending past the pivot or hinge therefore. The element may be provided with one or more ridges and/or grooves.

Preferably the used bag is inserted into the first chamber with the first closure in the first position. In the first position, the first closure may have been rotated through an angle of 90° or greater from its second position.

In the second position the first closure may seal the first chamber by abutting the body. The first closure may enclose the end of the first chamber and/or body. The first closure is preferably biassed against the first chamber and/or body by a force greater than the force of gravity acting on the bag and faeces the bag contains.

The method may include moving the first closure from the second position to the first position. Preferably the movement to the first position allows the dispense of a used bag, preferably into a waste receptacle, such as a bin.

The opening in the second chamber may be such that only one bag at a time can pass there through. Preferably the opening is such that a bag can be pulled through. Preferably the opening is such that a bag cannot fall through.

The second chamber may be provided with a second closure. Preferably the opening is provided in the second closure. The second closure may have a first position in which it allows access to the second chamber and a second position in which it seals the second chamber. The second closure is preferably a lid. The second closure is preferably pivotally mounted on the body. Preferably the second closure is mounted by a hinge. The mounting for the hinge may be provided on one or more projections from the body and/or second closure. The second closure and the body may be connected by a pin. The second closure may be mounted on the body by a screw fit engagement.

Preferably a resilient component encourages the second closure to the second position. The second closure may be urged to the second position by a spring. The second closure may be moved from the second position to the first position by the application of force to a part of the second closure by the user. The force may be applied to an element extending from the second closure, preferably extending past the pivot or hinge therefore. The element may be provided with one or more ridges and/or grooves.

In the second position the second closure may seal the second chamber by abutting the body. The second closure may enclose the end of the second chamber and/or body. The second closure is preferably biassed against the second chamber and/or body by a force greater than the force of gravity acting on the unused bags.

Preferably the unused bag is removed from the second chamber with the second closure in the first position. In the first position, the second closure may have been rotated through an angle of 90° or greater from its second position.

The container may include an air freshener. Preferably the air freshener is replaceable.
Preferably the air freshener is provided on the first closure, ideally on the inside of the lid.

The container may be provided with one or more light emitting units. One or more of the light emitting units may be a torch. One or more of the light emitting units may include an LED. One or more light emitting units may be provided to illuminate a location ahead of the container in use. One or more light emitting units may be provided to warn others of the container and/or its users presence.

One or more light emitting units may be provided in a handle of the container. One or more light emitting units may be provide on the front of the container, for instance on the second closure. One or more light emitting units may be provided on the outside of the second closure. One or more light emitting units may be provided inside the second chamber, for instance on the inside of the second closure, to illuminate the second chamber or at least entrance thereto. Preferably such light emitting units are only on when the second closure is not in the second position.

One or more light emitting units may be provided on the rear of the container, for instance on the first closure. One or more light emitting units may be provided on the outside of the first closure. One or more light emitting units may be provided inside the first chamber, for instance on the inside of the first closure, to illuminate the first chamber or at least entrance thereto. Preferably such light emitting units are only on when the first closure is not in the second position.

One or more light emitting units, preferably all, may be detachable from the container, for instance to allow washing of the container.

The container may be provided with one or more light reflecting units. One or more of the light reflecting units may be reflective strips. One or more light reflecting units may be provided on the rear of the container, for instance on the second closure. One or more light reflecting units may be provided on the outside of the second closure. One or more light reflecting units may be provided on the sides of the container.

The container may be provided with a clock. The clock may be recessed into the body of the container, ideally on the top thereof, or may be provided in a handle. The container may be provided with a compass. The compass may be recessed into the body of the container, ideally on the top thereof, or may be provided in a handle. The clock and/or compass, preferably both, may be detachable from the container, for instance to allow washing of the container.

The container may be provided with one or more further chambers, ideally separate from the first and/or second chambers. A further chamber may be provided on the outside of the body, for instance on the side of the body, ideally adjacent to the first chamber. The second chamber may be subdivided to give a second chamber and one or more further chambers. A further chamber may be provided with one or more wipes, particularly cleansing wipes. The one or more wipes may be provided directly within the further chamber or may be provided within a packet received within the further chamber.

The invention will now be described, by way of example only, and with reference to the accompanying drawings in which:
Figure 1 is a perspective view of a container according to an embodiment of the present invention;
Figure 2 is a perspective view showing the right hand side of the container body of the embodiment of Figure 1 in cross-section;
Figure 3 is a perspective view of the two lids for the container of Figure 1;
Figure 4 is an illustration of an alternative lid embodiment;
Figure 5 is an illustration of a further alternative lid embodiment; and
Figure 6 is an illustration of a further embodiment of the present invention.

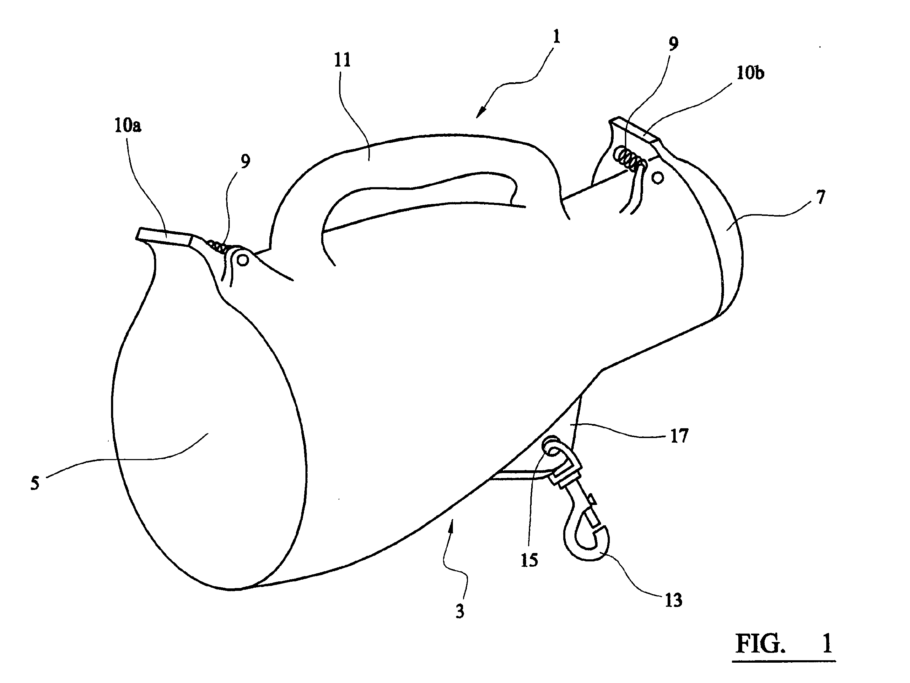

As shown in Figure 1, the container 1 is formed of a body 3 which is open at each end.
The ends are closed by a first lid 5 and a second lid 7. The lids 5, 7 are biassed, in each case, to the illustrated closed position by a coiled spring 9. By applying pressure to the element 10a on the first lid 5 or the element 10b on the second lid 7, the respective lids can be opened.

A handle 11 is provided on the body 3 to provide a user with a convenient means for gripping the container 1. This is particularly advantageous when the container 1 is incorporated into the lead used by the animal, with the handle 11 held by the user and the animal attached to a clip 13. The clip 13 is connected to the container by engagement with an aperture 15 on a projection 17. The clip 13 can also be used to attach the container 1 to the user, for instance for carrying.

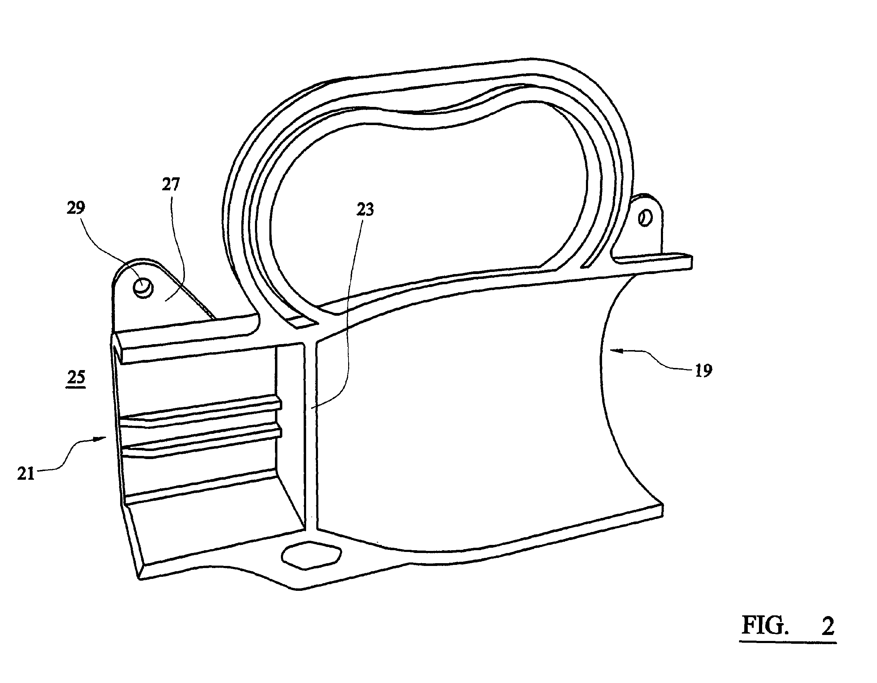

Opening the larger first lid 5 provides access to a first chamber 19, visible in the cross-section of Figure 2. Opening the smaller second lid 7 provides access to a second chamber 21, also visible in Figure 2. The first chamber 19 is separated from the second chamber 21 by a partition 23.

The second chamber 21 is of a sufficient size to store a number of unused disposable bags for collecting and containing faeces. The first chamber 19 is larger and longer than the second chamber 21 so that it is of a sufficient size to store one or more used bags containing faeces. The partition 23 keeps the clean unused bags and the dirty used bags entirely separate from one another.

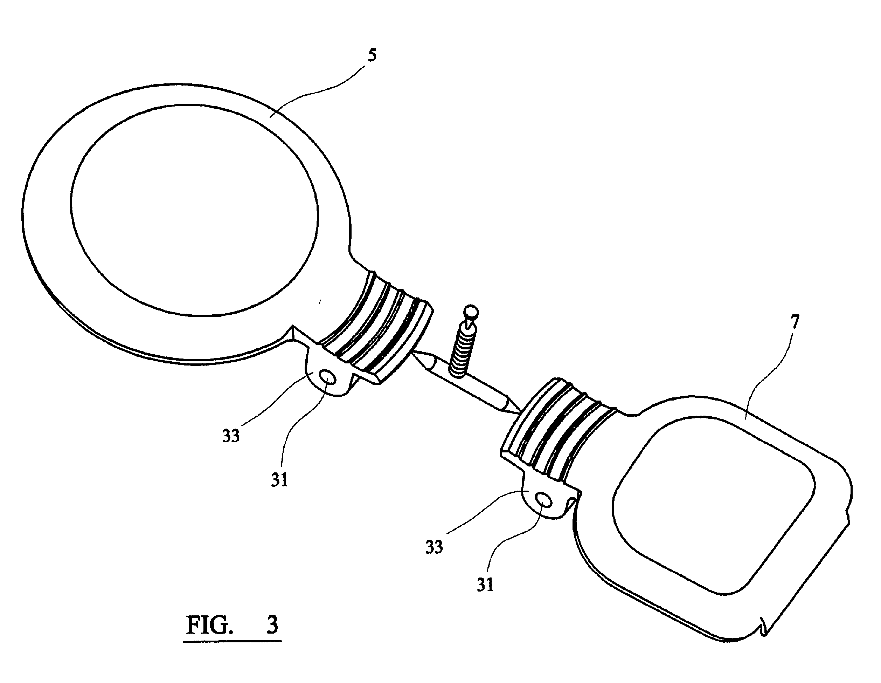

Near the opening 25 into the second chamber 21, the body 3 is provided with a projection 27 which in turn is provided with an aperture 29. A corresponding structure is provided on the other half of the body 3. As illustrated in Figure 3, the first lid 5 and the second lid 7 are provided with a pair of apertures 31 on projections 33. During assembly, the aperture 29 on the body, the apertures 31 on the second lid 7 and the other aperture on the other half of the body are aligned with on another and a pin is inserted to provide the pivot for the second lid 7 on the body 3. An equivalent structure and assembly is used for the first lid 5.

The container 1 may be moulded in plastics, for instance polypropylene. The apertures 15, 29, 31 may be formed during moulding or provided later, for instance by drilling.

A pet owner can collect and store their pet's faeces using the portable faeces container 1 as follows. The user opens the second lid 7 to access the second chamber 21 and removes an unused disposable bag. The user then places the faeces within the disposable bag and then seals the disposable bag, for example by tying a knot in the open end of the bag. The user then opens the first lid 5 to access the first chamber 19 and places the bag and its contents in it. The first lid 5 is then released to close the first chamber 19. The faeces are thus hygienically stored in the container until the user locates a designated waste disposal point for the faeces. The rigid nature of the container 1 also protects the bag during carrying and so prevents inadvertent punctures or tears in the bag occurring. The portable faeces container 1 can be used repeatedly, due to the large size of the first chamber 19, before finally disposing of the faeces at an appropriate location.

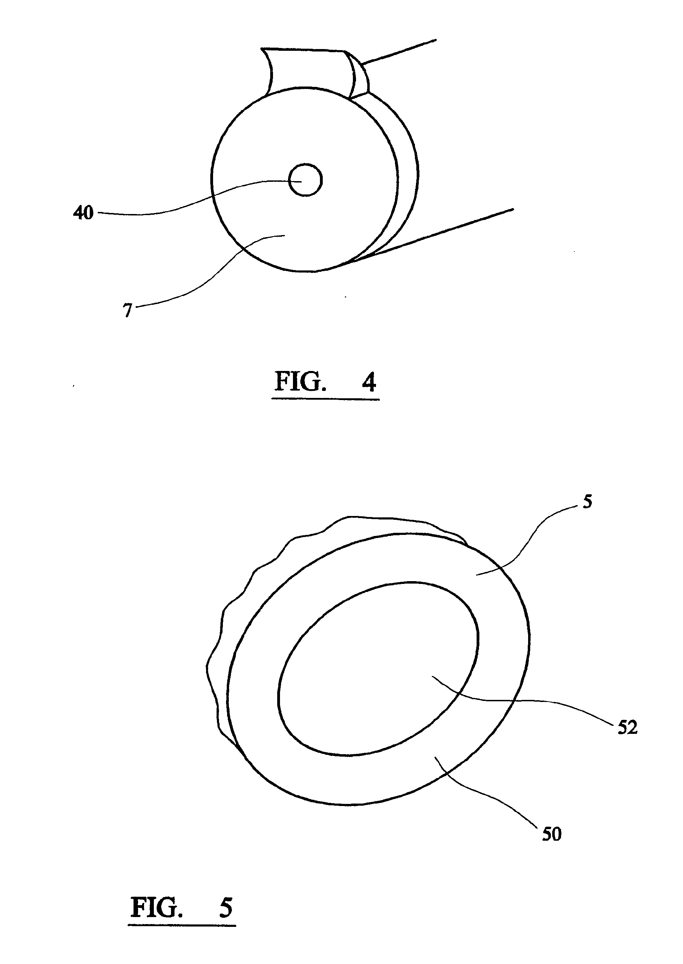

In the embodiment of the invention illustrated in Figure 4, a slightly different design of second lid 7 is provided. In this case, the second lid 7 can be opened as described above to provide bags in the second chamber. Rather than having to open the second lid 7 to remove a bag for use, however, the bag is pulled through a small hole 40. The hole 40 is small enough that a bag will not fall out of it. This form of lid offers more convenient access to a bag and retains all the other clean bags whilst one is removed.

In the embodiment of the invention illustrated in Figure 5, the inside surface 50 of the first lid 5 is provided with a removable air freshener 52. This counteracts any odour from the used bag stored in the first chamber 19. The air freshener 52 can be held in place by one or more clips (not shown) or be held in place by adhesive provided on the inside surface 50 or more preferably on the air freshener 52.

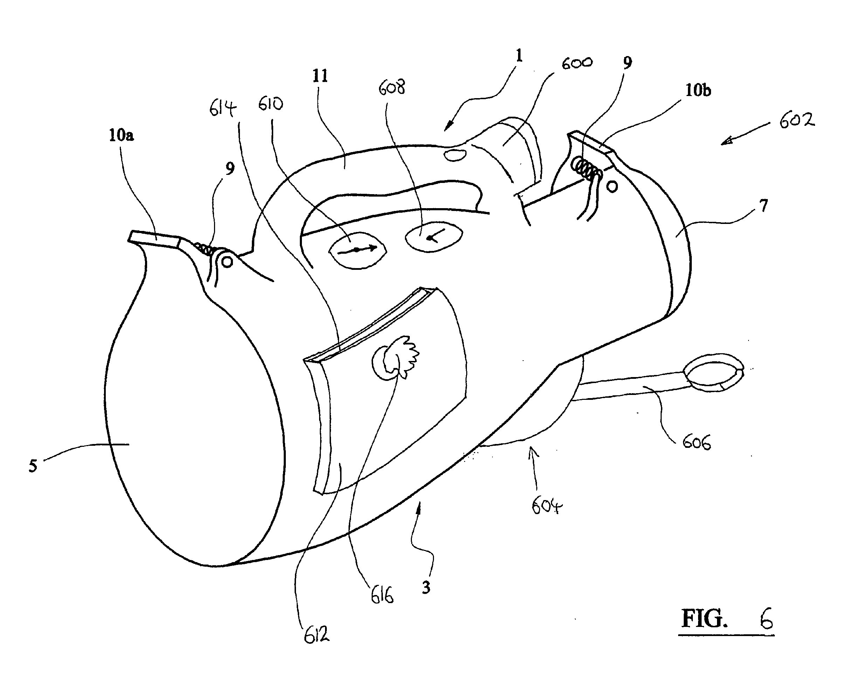

In the embodiment of Figure 6, the container 1 is provided with a number of further features.

The handle 11 has a torch 600 mounted on the front 602 so as to illuminate the space ahead of the container 1 in the dark. The on and off switch for the torch 600 is provided on the torch 600 itself or as a part of the handle 11.

Underneath the container 1 is a recess into which a retractable lead unit 604 is inserted. The recess extends into the second chamber, but still leaves sufficient space for the unused bags. A control to limit extension of the lead 606 and/or retraction of the lead 606 and/or to fix the lead 606 at a desired length can be provided on the handle 11.

On top of the body of the container 1, for instance under the handle 11, a clock 608 and a compass 610 are provided.

To the side of the first chamber a further chamber 612 is provided in the form of a pocket, to receive a packet 614 of wipes 616.

To increase visibility of the container 1, and hence user, in reduced light conditions, elements 618 of light reflecting material can be placed on the side of the container 1 and/or on the first closure and/or second closure. One or more further lights 620 may be provided for the same purpose.

Portable faeces containers according to the present invention have the advantage that they provide a closed container for the collection and storage of faeces. By having a chamber for holding unused disposable bags in addition to a chamber for storing used disposable bags containing faeces a convenient system is provided. A pet owner does not have to gather disposable bags and store them about their person ready for use. The present invention therefore provides the pet owner with the convenience of only having to take the portable faeces container when exercising their animal, without the need to carry separate bags too. Furthermore, the owner can use a disposable bag to collect the faeces, seal the bag (for example by tying a knot in the open end), and then store it in the second chamber very conveniently. The container of the present invention also has the advantage that it enables an owner to store multiple used and unused disposable bags together. This means that the owner is free to take their animal out for extended periods of time without the need to locate and use a number of waste bins or obtain further disposable bags.

## Claims

1. A portable container for faeces, the container comprising:
a body, the body being provided with a first chamber and a second chamber, the first chamber being separated from the second chamber by a partition;
the first chamber being provided with a first closure which in a first position allows access to the first chamber and in a second position seals the first chamber, the first chamber receiving one or more used bags containing faeces in use;
the second chamber being provided with an opening which allows access to the second chamber, the second chamber receiving a plurality of unused bags in use;
the partition keeping the clean unused bags entirely separate from the used bags;
wherein the body is provided with a handle;
wherein the container is provided with one or more attachment locations, a lead being connected to one of the one or more attachment locations in use and the lead also being connected to an animal in use.

2. A container according to claim 1, wherein the partition is provided closer to the opening for the second chamber than to the opening for the first chamber.

3. A container according to claim 1 or claim 2, wherein the first chamber is 10% or more larger than the second chamber in terms of its diameter and/or maximum width.

4. A container according to any preceding claim, wherein the opening in the second chamber is such that only one bag at a time can pass there through.

5. A container according to any preceding claim, wherein the second chamber is provided with a second closure, and wherein the second closure has a first position in which it allows access to the second chamber and a second position in which it seals the second chamber.

6. A container according to any preceding claim, wherein the container is provided with one or more of the following:
an air freshener;
one or more light emitting units, preferably on the front of the container to illuminate a location ahead of the container in use;
one or more light emitting units on the rear of the container, preferably to warn others of the container and/or its users presence;
one or more light reflecting units;
a clock;
a compass;
one or more further chambers, a further chamber being provided with one or more wipes.

7. A container according to any preceding claim, wherein the container includes a lead for an animal, the lead having a first extended state and the lead having a second retracted state.

8. A container according to any preceding claim, wherein the transition of the lead from the first extended state to the second extended state and/or vice versa is controlled by a user operated control, the user operated control being provided on a handle provided on the container.

9. A container according to any preceding claim, wherein the container is provided with one or more of: one or more light reflecting units, a clock, a compass, and one or more of those are detachable from the container.

10. A method of collecting faeces, the method comprising:
providing a container, the container comprising a body, the body being provided with a first chamber and a second chamber, the first chamber being separated from the second chamber by a partition, the first chamber being provided with a first closure which in a first position allows access to the first chamber and in a second position seals the first chamber, the second chamber being provided with an opening which allows access to the second chamber, the second chamber being provided with a plurality of clean unused bags;
carrying the container using a handle, a lead being connected to one of the one or more attachment locations provided on the container, the lead also being connected to an animal;
removing a bag from the second chamber;
collecting faeces in the bag;
opening the first closure of the first chamber; and
placing the bag containing the faeces in the first chamber, the partition keeping the clean unused bags entirely separate from the dirty used bags.

## Patentansprüche

1. Tragbarer Behälter für Fäzes, umfassend:
einen Körper, wobei der Körper mit einer ersten Kammer und einer zweiten Kammer ausgestattet ist, wobei die erste Kammer durch eine Trennwand von der zweiten Kammer getrennt ist;
wobei die erste Kammer mit einer ersten Verschlussvorrichtung ausgestattet ist, welche in einer ersten Position einen Zugang zu der ersten Kammer erlaubt und in einer zweiten Position die erste Kammer dicht verschließt,
wobei die erste Kammer einen oder mehrere verwendete Beutel, die Fäzes enthalten, im Gebrauch aufnimmt;
wobei die zweite Kammer mit einer Öffnung ausgestattet ist, die einen Zugang zu der zweiten Kammer erlaubt, wobei die zweite Kammer eine Vielzahl von unbenutzten Beuteln im Gebrauch aufnimmt;
wobei die Trennwand die unbenutzten Beutel vollständig getrennt von den verwendeten Beuteln hält;
wobei der Körper mit einem Handgriff ausgestattet ist;
wobei der Behälter mit einer oder mehreren Befestigungsstellen ausgestattet ist, eine Leine mit einer der einen oder mehreren Befestigungsstelle(n) im Gebrauch verbunden ist und die Leine auch im Gebrauch mit einem Tier verbunden ist.

2. Behälter nach Anspruch 1, wobei die Trennwand näher an der Öffnung für die zweite Kammer als an der Öffnung für die erste Kammer angeordnet ist.

3. Behälter nach Anspruch 1 oder Anspruch 2, wobei die erste Kammer 10% oder mehr größer als die zweite Kammer, ausgedrückt als ihr Durchmesser und/oder ihre maximale Weite, ist.

4. Behälter nach einem vorangehenden Anspruch, wobei die Öffnung in der zweiten Kammer so ist, dass nur ein Beutel auf einmal durchgehen kann.

5. Behälter nach einem vorangehenden Anspruch, wobei die zweite Kammer mit einer zweiten Verschlussvorrichtung ausgestattet ist und wobei die zweite Verschlussvorrichtung eine erste Position hat, in welcher sie einen Zugriff auf die zweite Kammer erlaubt, und eine zweite Position hat, in welcher sie die zweite Kammer dicht verschließt.

6. Behälter nach einem vorangehenden Anspruch, wobei der Behälter mit einem oder mehreren der Folgenden ausgestattet ist:
einem Lufterfrischer;
einer oder mehreren Licht-emittierenden Einheit(en), vorzugsweise an der Vorderseite des Behälters, um eine Stelle vor dem Behälter im Gebrauch zu beleuchten;
einer oder mehreren Licht-emittierenden Einheit(en) an der Rückseite des Behälters, vorzugsweise um andere vor dem Behälter und/oder der Anwesenheit seiner Verwender zu warnen;
einer oder mehreren Licht-reflektierenden Einheit(en);
einer Uhr;
einem Kompass;
einer oder mehreren weiteren Kammer(n), wobei eine weitere Kammer mit einem (Reinigungs-)Tuch oder mehreren (Reinigungs-)Tüchern ausgestattet ist.

7. Behälter nach einem vorangehenden Anspruch, wobei der Behälter eine Leine für ein Tier umfasst, wobei die Leine einen ersten ausgedehnten Zustand hat und die Leine einen zweiten zurückgezogenen Zustand hat.

8. Behälter nach einem vorangehenden Anspruch, wobei der Übergang der Leine aus dem ersten ausgedehnten Zustand in den zweiten ausgedehnten Zustand und/oder umgekehrt durch eine vom Verwender durchgeführte Steuerung gesteuert wird, wobei die vom Verwender durchgeführte Steuerung an einem Handgriff bereitgestellt ist, welcher an dem Behälter angebracht ist.

9. Behälter nach einem vorangehenden Anspruch, wobei der Behälter mit einem oder mehreren von einer oder mehreren Licht-reflektierenden Einheit(en), einer Uhr, einem Kompass ausgestattet ist, wobei eines oder mehrere dieser vom Behälter ablösbar sind.

10. Verfahren zum Sammeln von Fäzes, umfassend:
Bereitstellen eines Behälters, wobei der Behälter einen Körper umfasst, wobei der Körper mit wenigstens einer ersten Kammer und einer zweiten Kammer ausgestattet ist, wobei die erste Kammer durch eine Trennwand von der zweiten Kammer getrennt ist, wobei die erste Kammer mit einer ersten Verschlussvorrichtung ausgestattet ist, welche in einer ersten Position einen Zugang zu der ersten Kammer erlaubt und in einer zweiten Position die erste Kammer dicht verschließt, wobei die zweite Kammer mit einer Öffnung ausgestattet ist, die einen Zugang zu der zweiten Kammer erlaubt, wobei die zweite Kammer mit einer Vielzahl von sauberen ungebrauchten Beuteln ausgestattet ist;
Tragen des Behälters unter Verwendung eines Handgriffs, wobei eine Leine mit einer der einen oder mehreren Befestigungsstellen, die an dem Behälter angeordnet sind, verbunden ist, wobei die Leine auch mit einem Tier verbunden ist;
Entfernen eines Beutels aus der zweiten Kammer;
Sammeln von Fäzes in dem Beutel;
Öffnen der ersten Verschlussvorrichtung der ersten Kammer und
Platzieren des Beutels, der die Fäzes enthält, in der ersten Kammer, wobei die Trennwand die sauberen ungebrauchten Beutel von den schmutzigen gebrauchten Beuteln völlig getrennt hält.

## Revendications

1. Contenant portatif pour excréments, le contenant comprenant :
un corps, le corps étant prévu avec une première chambre et une seconde chambre, la première chambre étant séparée de la seconde chambre par une cloison ;
la première chambre étant prévue avec une première fermeture qui, dans une première position, permet l'accès à la première chambre et dans une seconde position ferme hermétiquement la première chambre, la première chambre recevant un ou plusieurs sachets usagés contenant les excréments, à l'usage ;
la seconde chambre étant prévue avec une ouverture qui permet l'accès à la seconde chambre, la seconde chambre recevant une pluralité de sachets inutilisés, à l'usage ;
la cloison maintenant les sachets inutilisés propres, complètement séparés des sachets usagés ;
dans lequel le corps est doté d'une poignée ;
dans lequel le contenant est doté d'un ou de plusieurs emplacements de fixation, une laisse étant raccordée à l'un des un ou plusieurs emplacements de fixation à l'usage, la laisse étant également raccordée à un animal, à l'usage.

2. Contenant selon la revendication 1, dans lequel la cloison est prévue plus à proximité de l'ouverture de la seconde chambre que de l'ouverture de la première chambre.

3. Contenant selon la revendication 1 ou la revendication 2, dans lequel la première chambre est 10 % ou plus, plus grande que la seconde chambre du point de vue de son diamètre et/ou de la largeur maximum.

4. Contenant selon l'une quelconque des revendications précédentes, dans lequel l'ouverture dans la seconde chambre est telle que seul un sachet à la fois peut passer à travers.

5. Contenant selon l'une quelconque des revendications précédentes, dans lequel la seconde chambre est prévue avec une seconde fermeture, et dans lequel la seconde fermeture a une première position dans laquelle elle permet l'accès à la seconde chambre et une seconde position
dans laquelle elle ferme hermétiquement la seconde chambre.

6. Contenant selon l'une quelconque des revendications précédentes, dans lequel le contenant est prévu avec un ou plusieurs éléments suivants :
un désodorisant ;
une ou plusieurs unités d'émission de lumière, de préférence à l'avant du contenant pour éclairer un emplacement situé devant le contenant, à l'usage ;
une ou plusieurs unités d'émission de lumière à l'arrière du contenant, de préférence pour avertir les autres de la présence du contenant et/ou de ses utilisateurs ;
une ou plusieurs unités de réflexion de lumière ;
une montre;
une boussole ;
une ou plusieurs chambres supplémentaires, une chambre supplémentaire étant prévue avec une ou plusieurs lingettes.

7. Contenant selon l'une quelconque des revendications précédentes, dans lequel le contenant comprend une laisse pour un animal, la laisse ayant un premier état déployé et la laisse ayant un second état rétracté.

8. Contenant selon l'une quelconque des revendications précédentes, dans lequel la transition de la laisse du premier état déployé au second état rétracté et/ou vice versa est contrôlée par une commande actionnée par un utilisateur, la commande actionnée par l'utilisateur étant prévue sur une poignée prévue sur le contenant.

9. Contenant selon l'une quelconque des revendications précédentes, dans lequel le contenant est prévu avec un ou plusieurs des éléments : une ou plusieurs unités de réflexion de lumière, une montre, une boussole et un ou plusieurs de ces éléments sont détachables du contenant.

10. Procédé pour collecter des excréments, le procédé comprenant les étapes consistant à :
prévoir un contenant, le contenant comprenant un corps, le corps étant prévu avec une première chambre et une seconde chambre, la première chambre étant séparée de la seconde chambre par une cloison, la première chambre étant prévue avec une première fermeture qui, dans une première position, permet l'accès à la première chambre et dans une seconde position, ferme hermétiquement la première chambre, la seconde chambre étant prévue avec une ouverture qui permet l'accès à la seconde chambre, la seconde chambre étant prévue avec une pluralité de sachets inutilisés propres ;
transporter le contenant en utilisant une poignée, une laisse étant raccordée à l'un des un ou plusieurs emplacements de fixation prévus sur le contenant, la laisse étant également raccordée à un animal ;
retirer un sachet de la seconde chambre ;
collecter les excréments dans le sachet ;
ouvrir la première ouverture de la première chambre ; et
placer le sachet contenant les excréments dans la première chambre, la séparation maintenant les sacs inutilisés propres complètement séparés des sachets usagés sales.
